# EUROPEAN PATENT APPLICATION

(11) **EP 4 273 965 A1**
(43) Date of publication of application: **08.11.2023**
(21) Application number: 22913992.8
(22) Date of filing: 01.12.2022
(51) Int. Cl.: H01M 4/58

(54) **NEGATIVE ELECTRODE MATERIAL AND PREPARATION METHOD THEREFOR, AND LITHIUM-ION BATTERY**

(30) Priority: 31.12.2021 CN 202111665252
(71) Applicant: BTR NEW MATERIAL GROUP CO., LTD., Shenzhen, Guangdong 518106 (CN)
(72) Inventor: CHE, Zongzhou, Shenzhen, Guangdong 518106 (CN); HE, Peng, Shenzhen, Guangdong 518106 (CN); XIAO, Chengmao, Shenzhen, Guangdong 518106 (CN); GUO, Eming, Shenzhen, Guangdong 518106 (CN); REN, Jianguo, Shenzhen, Guangdong 518106 (CN); HE, Xueqin, Shenzhen, Guangdong 518106 (CN)
(74) Representative: advotec.
(86) International application number: PCT/CN2022/135736
(87) International publication number: WO 2023/124737

(57) **Abstract**

The present disclosure relates to an anode material, a method for preparing the same, and a lithium ion battery, which belong to the technical field of energy storage materials. The anode material includes a LiₓM_{y}SiO₄ material, a carbon material and nano-silicon. The LiₓM_{y}SiO₄ material and the carbon material has a network structure, independently forming a first skeleton and a second skeleton in the anode material respectively. The first skeleton and the second skeleton are entangled with each other, and the nano-silicon is distributed in the matrix or/and on the surface of LiₓM_{y}SiO₄ material. In the LiₓM_{y}SiO₄ material, the values of x and y satisfy charge balance, and M includes a metal element capable of reducing silicon oxides, the metal element excludes Li. The anode material has better electrical conductivity, more stable structure, lower volume expansion, higher electrical conductivity, higher first efficiency and excellent rate performance.

## Description

### RELATED APPLICATIONS

The present disclosure claims priority to Chinese Patent Application No. 202111665252.2, filed on December 31, 2021, with titled as "ANODE MATERIAL, METHOD FOR PREPARING THE SAME, AND LITHIUM ION BATTERY", which is entirely incorporated herein by reference.

### TECHNICAL FIELD

The present disclosure relates to the technical field of energy storage materials, and in particular, to an anode material, a method for preparing the same, and a lithium ion battery.

### BACKGROUND

At present, graphite is an anode material most widely used for lithium batteries. But due to its low theoretical capacity (372mAh/g), it is difficult to meet the requirement for high energy density. Silicon material is considered to be a new generation of lithium battery anode material, due to its high theoretical capacity (4200mAh/g), and has received extensive attention and research from people in the industry.

However, silicon also has obvious disadvantages, e.g., low electrical conductivity of silicon. In addition, the volume expansion of silicon changes greatly during the cycle, and it is prone to pulverization, the active material loses electrical contact with the current collector, and even further falls off from the current collector, eventually resulting in severe degradation of cycling performance. Further, the expansion causes the formed SEI film to rupture, exposing a new interface, and continuing to form a new SEI film, resulting in a thicker SEI film on the outer layer of silicon particles after cycling, eventually blocking the intercalation of lithium ions.

How to more effectively alleviate the volume expansion of silicon, ensure the cycle stability of silicon anodes, and obtain silicon anode materials with lower volume expansion, higher first efficiency, and long cycle life are current technical hotspots in the field of lithium batteries that need to be solved urgently.

Combining graphite with silicon can solve the above problems to a certain extent, but the silicon-carbon composite materials in the related art are usually coated with silicon in the carbon layer, resulting in reducing the first efficiency of the silicon-carbon composite material.

### SUMMARY

Embodiments of the present disclosure include providing an anode material, a method for preparing the same, and a lithium ion battery, such that the first efficiency and cycle performance of the anode material can be improved while the volume expansion of the anode material is improved.

In a first aspect, one embodiment of the present disclosure provides an anode material, the anode material includes a composite material, the composite material includes a first skeleton and a second skeleton that are entangled with each other, and nano-silicon; the first skeleton includes a LiₓM_{y}SiO₄ material, the second skeleton includes a carbon material, and the nano-silicon is distributed in the LiₓM_{y}SiO₄ material or/and on a surface of the LiₓM_{y}SiO₄ material. In the LiₓM_{y}SiO₄ material, values of x and y satisfy charge balance, and M includes a metal element capable of reducing silicon oxides, the metal element excludes Li.

In combination with the first aspect, in some embodiments of the present disclosure, the anode material further includes a carbon coating layer present on the surface of the composite material.

In combination with the first aspect, in some embodiments of the present disclosure, the thickness of the carbon coating layer is 5nm-80nm.

In combination with the first aspect, in some embodiments of the present disclosure, in the LiₓM_{y}SiO₄ material, 2≤x≤3.4, 0.4≤y≤1.

In combination with the first aspect, in some embodiments of the present disclosure, M includes Mg or/and Al.

In combination with the first aspect, in some embodiments of the present disclosure, the particle size of nano-silicon is 5nm-200nm.

In combination with the first aspect, in some embodiments of the present disclosure, the carbon material includes one or a combination of soft carbon and hard carbon.

In combination with the first aspect, in some embodiments of the present disclosure, the specific surface area of the anode material is 1 m²/g-3 m²/g.

In combination with the first aspect, in some embodiments of the present disclosure, the shape of the anode material is spherical particles, and the average particle diameter D50 of the anode material is 5µm-30µm.

In combination with the first aspect, in some embodiments of the present disclosure, the diameter of the second skeleton is 10nm-500nm.

In combination with the first aspect, in some embodiments of the present disclosure, the diameter of the first skeleton is 10nm-400nm.

In combination with the first aspect, in some embodiments of the present disclosure, the LiₓM_{y}SiO₄ material accounts for 5%-30% by mass of the anode material.

In combination with the first aspect, in some embodiments of the present disclosure, the mass percentage of nano-silicon in the anode material is 30%-60%.

In combination with the first aspect, in some embodiments of the present disclosure, the carbon material accounts for 10%-65% by mass of the anode material.

In combination with the first aspect, in some embodiments of the present disclosure, the carbon coating layer includes the carbon material.

In a second aspect, the embodiment of the present disclosure provides an anode material. The anode material includes a LiₓM_{y}SiO₄ material, a carbon material and nano-silicon. The LiₓM_{y}SiO₄ material is a porous structure, and the pores of the LiₓM_{y}SiO₄ material are filled with carbon materials, and the nano-silicon is distributed in the LiₓM_{y}SiO₄ material or/and on a surface of the LiₓM_{y}SiO₄ material. In the LiₓM_{y}SiO₄ material, values of x and y satisfy charge balance, and M includes a metal element capable of reducing silicon oxides, the metal element excludes Li.

In combination with the second aspect, in some embodiments of the present disclosure, the anode material further includes a carbon coating layer present on at least a part of the surface of the composite material.

In combination with the second aspect, in some embodiments of the present disclosure, the thickness of the carbon coating layer is 5nm-80nm.

In combination with the second aspect, in some embodiments of the present disclosure, in the LiₓM_{y}SiO₄ material, 2≤x≤3.4, 0.4≤y≤1;

In combination with the second aspect, in some embodiments of the present disclosure, M includes Mg or/and Al.

In combination with the second aspect, in some embodiments of the present disclosure, the particle size of nano-silicon is 5nm-200nm.

In combination with the second aspect, in some embodiments of the present disclosure, the carbon material includes one or a combination of soft carbon and hard carbon.

In combination with the second aspect, in some embodiments of the present disclosure, the specific surface area of the anode material is 1 m²/g-3 m²/g.

In combination with the second aspect, in some embodiments of the present disclosure, the shape of the anode material is spherical particles, and the average particle diameter D50 of the anode material is 5µm-30µm.

In combination with the second aspect, in some embodiments of the present disclosure, the porosity of the LiₓM_{y}SiO₄ material is 30%-46%.

In combination with the second aspect, in some embodiments of the present disclosure, the LiₓM_{y}SiO₄ material accounts for 5%-30% by mass of the anode material.

In combination with the second aspect, in some embodiments of the present disclosure, the mass percentage of nano-silicon in the anode material is 30%-60%.

In combination with the second aspect, in some embodiments of the present disclosure, the carbon material accounts for 10%-65% by mass of the anode material.

In combination with the second aspect, in some embodiments of the present disclosure, the carbon coating layer includes the carbon material.

In a third aspect, the embodiment of the present disclosure provides a lithium ion battery, including the anode material provided in the first aspect or the second aspect.

In a fourth aspect, the embodiment of the present disclosure provides a method for preparing the anode material. The method includes:
a LiₓM_{y}SiO₄ material is formed, in which the nano-silicon is distributed in the LiₓM_{y}SiO₄ material or/and on a surface of the LiₓM_{y}SiO₄ material. In the LiₓM_{y}SiO₄ material, M includes a metal element capable of reducing silicon oxides, the metal element excludes Li; and
pores of the porous structure or voids of the network structure of the LiₓM_{y}SiO₄ material are filled with a carbon material to obtain the anode material.

In combination with the fourth aspect, in some embodiments of the present disclosure, the method includes:
mixing a skeleton material having the network structure or the porous structure with a lithium salt, and then sintering to obtain the LiₓM_{y}SiO₄ material, wherein the skeleton material includes nano-silicon, silicon oxide and metal M oxide loaded on a surface of the nano-silicon; and forming the carbon material in the pores or voids of the LiₓM_{y}SiO₄ material to obtain the anode material; or
mixing the skeleton material having the network structure or the porous structure, the lithium salt, and an organic carbon source, and then performing heat treatment to obtain the anode material, wherein the skeleton material includes nano-silicon, silicon oxide and metal M oxide loaded on a surface of the nano-silicon.

In combination with the fourth aspect, in some embodiments of the present disclosure, the step of forming a carbon material in the pores or voids of the LiₓM_{y}SiO₄ material to obtain the anode material includes: mixing and calcining the LiₓM_{y}SiO₄ material with the organic carbon source, carbonizing the organic carbon source to form the carbon material; or forming the carbon material in the pores or voids of the LiₓM_{y}SiO₄ material by chemical vapor deposition;
or the step of mixing the skeleton material having the network structure or the porous structure, the lithium salt, and an organic carbon source includes:
mixing the skeleton material having the network structure or the porous structure with the lithium salt, and then mixing with the organic carbon source.

In combination with the fourth aspect, in some embodiments of the present disclosure, the method for preparing the skeleton material includes:
mixing and granulating the silicon oxide and a binder to obtain a precursor 1;
mixing the precursor 1, metal M powder and molten salt, and performing a thermal reaction such that at least part of the silicon oxide is reduced to nano-silicon to obtain a precursor 2; and
pickling the precursor 2 to remove part of the metal M oxide, so as to form the skeleton material having the porous structure or the network structure.

In combination with the fourth aspect, in some embodiments of the present disclosure, the silicon oxide and the binder are dispersed in a solution, and spray granulated to obtain the precursor 1.

In combination with the fourth aspect, in some embodiments of the present disclosure, a mass ratio of the silicon oxide to the binder is (40-100): 1.

In combination with the fourth aspect, in some embodiments of the present disclosure, a mass ratio of the precursor 1, the molten salt and the metal M powder is 1:(3-8):(0.5-1.5).

In combination with the fourth aspect, in some embodiments of the present disclosure, the metal M powder includes one of Mg powder, Al powder and MgAl alloy powder or a combination thereof.

In combination with the fourth aspect, in some embodiments of the present disclosure, the skeleton material, soluble lithium salt and water are mixed, stirred uniformly and then dried.

Compared with the prior art, the beneficial effects of the present disclosure include:
with respect to the anode material of the first aspect: the addition of LiₓM_{y}SiO₄ material (M includes a metal element capable of reducing silicon oxide, the metal element excludes Li), can supplement lithium to the anode material to improve its first efficiency, and the LiₓM_{y}SiO₄ material has better lithium ion and electronic conductivity, such that the electrical conductivity of the material can be improved. The LiₓM_{y}SiO₄ material of the network structure and the carbon material of the network structure are entangled with each other, and the carbon material of the network structure is basically distributed everywhere in the anode material, which can make the anode material more conductive. Meanwhile, since nano-silicon is distributed in the matrix or/and surface of the LiₓM_{y}SiO₄ material, the addition of nano-silicon can increase the capacity of the material, and the particle size of nano-silicon is smaller and the distribution is more uniform. There will be volume expansion during the discharge process, but due to the entangled network structure of LiₓM_{y}SiO₄ material and network structure of carbon materials, the expansion of nano-silicon can be limited, and the collapse of the structure caused by the volume expansion of the nano-silicon can be avoided to a certain extent. The anode material can have better electrical conductivity, more stable structure, lower volume expansion, higher electrical conductivity, higher first efficiency and excellent rate performance.

With respect to the anode material of the second aspect: the addition of LiₓM_{y}SiO₄ material (M includes a metal element capable of reducing silicon oxide, the metal element excludes Li), can supplement lithium to the anode material to improve its first efficiency, and the LiₓM_{y}SiO₄ material has better lithium ion and electronic conductivity, such that the electrical conductivity of the material can be improved. Carbon materials are distributed in the pores of the porous LiₓM_{y}SiO₄ material, which can make the conductivity of the anode material higher. Meanwhile, because the LiₓM_{y}SiO₄ material is distributed with nano-silicon in the matrix or/and surface, the addition of nano-silicon can increase the capacity of the material, and the particle size of nano-silicon is small and the distribution is relatively uniform. Although nano-silicon will expand in volume during a charging and discharging process, but due to the porous structure of the LiₓM_{y}SiO₄ material and the carbon material in the pores, the expansion of nano-silicon can be limited, and the collapse of the structure caused by the volume expansion of nano-silicon can be avoided to a certain extent. The anode material can have better electrical conductivity, more stable structure, lower volume expansion, higher electrical conductivity, higher first efficiency and excellent rate performance.

With respect to the method for preparing the anode material: a LiₓM_{y}SiO₄ material with a porous structure or a skeleton structure is formed, such that the distribution among the nano-silicon and the LiₓM_{y}SiO₄ material is relatively uniform, and the nano-silicon is located in the matrix or/and surface of the LiₓM_{y}SiO₄ material. After compounding with a carbon material, the obtained anode material has better conductivity, more stable structure, lower volume expansion, higher electrical conductivity, higher first efficiency and excellent rate performance.

With respect to the lithium ion battery: the lithium ion battery uses the anode material provided by the present disclosure, which can make the battery have lower volume expansion, higher first efficiency and excellent rate performance.

### BRIEF DESCRIPTION OF DRAWINGS

In order to more clearly illustrate the technical solutions of the embodiments of the present disclosure, the following will briefly introduce the accompanying drawings used in the embodiments. It should be understood that the following drawings only show some embodiments of the present disclosure, accordingly it should not be regarded as a limitation on the scope. For those skilled in the art, other related drawings can be also obtained based on these drawings without inventive work.
FIG. 1 is a cross-sectional view illustrating the anode material according to an embodiment of the present disclosure;
FIG. 2 is a process flow chart illustrating a method for preparing an anode material according to an embodiment of the present disclosure;
FIG. 3 is a scanning electron microscope (SEM) photograph and an EDS image of precursor 5 according to Example 1;
FIG. 4 is an XRD image of the anode material provided by Example 1 of the present disclosure;
FIG. 5 is a scanning electron microscope of the anode material provided by Example 1 of the present disclosure;

Reference numerals: 110 - LiₓM_{y}SiO₄ material; 120 - carbon material; 130 - nanometer silicon.

### DESCRIPTION OF EMBODIMENTS

In order to make the objects, technical solutions and advantages of the embodiments of the present disclosure clearer, the technical solutions of the present disclosure are described clearly and completely below.

The inventor found that silicon can increase the capacity of the anode material, but it is easy to cause volume expansion, and the oxide layer on the surface of silicon will cause the first efficiency of the battery to decrease; carbon can improve the conductivity of the anode material, but its capacity is relatively low. The LiₓM_{y}SiO₄ can supplement lithium to the anode material to improve the first efficiency, and the LiₓM_{y}SiO₄ material has good lithium ion and electronic conductivity, which can improve the electrical conductivity of the material. Therefore, the inventor provides an anode material, which combines the three materials, such that the anode material has lower volume expansion, higher electrical conductivity, higher first efficiency and excellent rate performance.

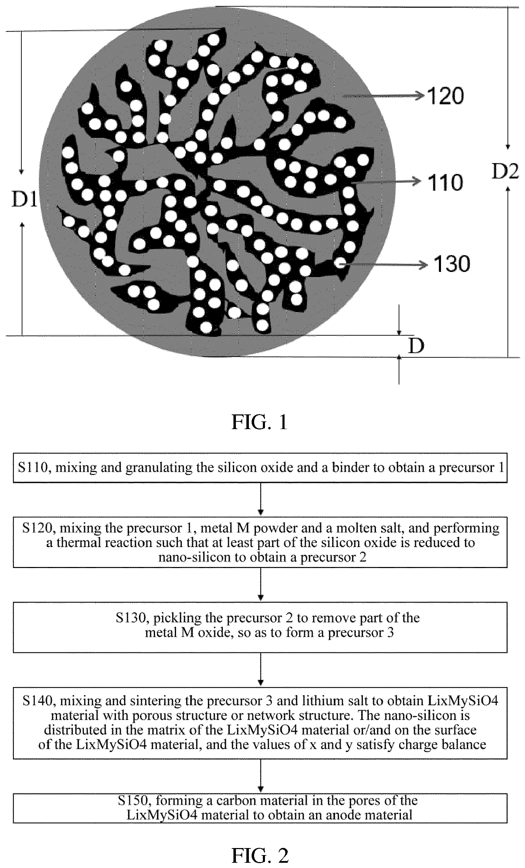

FIG. 1 is a cross-sectional view illustrating an anode material according to an embodiment of the present disclosure. Referring to FIG. 1, in FIG. 1, the black part is LiₓM_{y}SiO₄ material 110, the white part is nano-silicon 130, and the gray part is carbon material 120.

Referring to FIG. 1, the anode material includes a first skeleton and a second skeleton that are entangled with each other, and nano-silicon 130. The first skeleton includes a LiₓM_{y}SiO₄ material 110, and the second skeleton includes a carbon material 120. The LiₓM_{y}SiO₄ material 110 is distributed with nano-silicon 130 inside matrix or/and on the surface. Among them, in the LiₓM_{y}SiO₄ material, the values of x and y satisfy charge balance, and M includes a metal element capable of reducing silicon oxide, the metal element excludes Li.

The first skeleton and the second skeleton are entangled with each other to form a composite skeleton. The LiₓM_{y}SiO₄ material 110 of the first skeleton is entangled with the carbon material 120 of the second skeleton, and the LiₓM_{y}SiO₄ material of the first skeleton is entangled in the carbon material 120 of the second skeleton 110, which can make the structure of the anode material more stable, Meanwhile, the entire anode material is basically uniformly distributed with carbon material 120, making the material more conductive.

The addition of LiₓM_{y}SiO₄ material 110 (M includes a metal element capable of reducing silicon oxides, the metal element excludes Li) can supplement lithium to the anode material to improve its first efficiency. Nano-silicon 130 is distributed in the matrix or/and surface of LiₓM_{y}SiO₄ material 110, such that the capacity of the anode material can be increased. Although the volume of nano-silicon 130 increases during a charging and discharging process, due to the effect of the LiₓM_{y}SiO₄ material 110 and carbon material 120 that are entangled each other, the expansion of nano-silicon 130 can be limited, and to a certain extent, the structure collapse caused by the volume expansion of the nano-silicon 130 can be avoided. The anode material can have better electrical conductivity, more stable structure, lower volume expansion, higher electrical conductivity, higher first efficiency and excellent rate performance.

Both the LiₓM_{y}SiO₄ material 110 and the carbon material 120 may have a network structure. Due to the LiₓM_{y}SiO₄ material 110 with the network structure and the carbon material 120 with the network structure that are entangled, the expansion of the nano-silicon 130 can be better restricted, and the structure collapse caused by the volume expansion of the nano-silicon 130 can be avoided. The anode material can have an improved conductivity, a stable structure, low volume expansion, higher conductivity, higher first efficiency and excellent rate performance.

It should be noted that the network structure here does not refer to a structure of invisible computer network, but refers to a network structure of tangible material, which is described in relative to a solid structure. For example, for a spherical material, if its interior having no voids is consistent with the surface structure of the spherical material, it is called as a solid structure; if its interior has a large void, it is called a hollow structure; if its interior has many voids which may partially communicated with one another, it is called as a network structure.

For another example: if a material is called as a metal mesh, its usual structure is that multiple metal wires are woven together to form a metal mesh with a multiple hole structures. The network structure in the present disclosure is a certain difference from the above metal mesh. The matrix of the network structure in the present disclosure is basically a three-dimensional (3D) structure (For example, spherical structure, cube structure, cuboid structure, and other irregular 3D structures). The interior and the surface have many pores (For example, similar to a 3D metal foam structure, but the material is different, and the structure of the pores may also be different), thus forming a network structure.

Therefore, the network structure in the present disclosure refers to the structure in which the 3D LiₓM_{y}SiO₄ material 110 and the carbon material 120 have many voids inside and on the surface, such that the voids and materials of them can be entangled with each other. Here, the voids in the network structure are not limited to uniformly distributed voids, which may have larger voids in some areas and smaller voids in some areas, and may be irregular voids.

The expression "Nano-silicon 130 is distributed in the matrix or/and surface of LiₓM_{y}SiO₄ material 110" means that: the surface of the LiₓM_{y}SiO₄ material 110 is distributed with nano-silicon 130; or the matrix of LiₓM_{y}SiO₄ material 110 is distributed with nano-silicon 130; alternatively, nano-silicon 130 is uniformly distributed both in the matrix of and the surface of the LiₓM_{y}SiO₄ material 110.

Nano-silicon 130 mainly refers to a silicon material with a particle size of nanoscale. The silicon material with this particle size has a relatively small particle size. Under the same silicon content, nano-silicon 130 with a smaller particle size is more uniformly distributed on the LiₓM_{y}SiO₄ material 110.

Although the present disclosure records that the nano-silicon 130 is distributed in the matrix or/and on the surface of the LiₓM_{y}SiO₄ material 110, it does not limit that the mass of the LiₓM_{y}SiO₄ material 110 is greater than the mass of the nano-silicon 130. In fact, the mass of the LiₓM_{y}SiO₄ material 110 can be greater than the mass of the nano-silicon 130, the mass of the nano-silicon 130 can also be greater than the mass of the LiₓM_{y}SiO₄ material 110, and the mass of the LiₓM_{y}SiO₄ material 110 can be equal to the mass of the nano-silicon 130.

Referring to FIG. 1, the anode material includes the LiₓM_{y}SiO₄ material 110, the carbon material 120 and nano-silicon 130. The LiₓM_{y}SiO₄ material 110 is a porous structure, the pores of LiₓM_{y}SiO₄ material 110 are filled with the carbon material 120. The LiₓM_{y}SiO₄ material 110 is distributed with nano-silicon 130 in the matrix or/and on the surface, the values of x and y satisfy charge balance, and M includes a metal element capable of reducing silicon oxides, the metal element excludes Li.

The pores of the porous LiₓM_{y}SiO₄ material 110 are filled with the carbon material 120, which can make the structure of the anode material more stable. Meanwhile, the carbon material 120 is basically uniformly distributed in the entire anode material, which can make the material more conductive. The addition of LiₓM_{y}SiO₄ material 110 (M includes a metal element capable of reducing silicon oxides, the metal element excludes Li) can supplement lithium to the anode material to improve its first efficiency. Nano-silicon 130 is distributed in the matrix or/and on the surface of LiₓM_{y}SiO₄ material 110, such that the capacity of the anode material can be increased. Although the volume of the nano-silicon 130 increases during a charging and discharging process, due to the effect of the LiₓM_{y}SiO₄ material 110 with the porous structure and the carbon material 120 with the porous structure that are filled with each other, the expansion of nano-silicon 130 can be limited, and to a certain extent, the structure collapse caused by the volume expansion of nano-silicon 130 can be avoided. The anode material can have better electrical conductivity, more stable structure, lower volume expansion, higher electrical conductivity, higher first efficiency and excellent rate performance.

As an example, the porosity of the LiₓM_{y}SiO₄ material 110 with a porous structure is 30%-46%, e.g., 30%, 32%, 35%, 40%, 43%, 46%, etc., that is, to ensure that the LiₓM_{y}SiO₄ material has sufficient volume to fill with carbon materials, such that the conductivity of the composite anode material can be improved, the expansion rate of the composite anode material can be reduced, ensuring that the capacity will not be excessively low.

It should be noted that: the carbon material 120 can also be regarded as a porous structure. The porous structure here refers to: the LiₓM_{y}SiO₄ material 110 and the carbon material 120 are basically 3D structures, and there are many pores inside and/or on the surface, and some of the pores can be connected, and some of the pores are not connected, such that the two materials can fill each other. Here, the pores of the porous structure are not limited to pores distributed uniformly, and are not limited to pores with uniform pore diameters, which may be larger pores in some areas and smaller pores in some areas, and may be irregular pores.

Whether it is a porous structure or a network structure, optionally, the skeleton diameter of the carbon material 120 is 10nm-500nm; the skeleton diameter of the LiₓM_{y}SiO₄ material 110 is 10nm-400nm. It is not limited that all skeleton diameters of the carbon material 120 and the LiₓM_{y}SiO₄ material 110 fall within the above range, and generally more than 70% of the skeletons have diameters within the above range, such that it is easy to realize the mutual filling or mutual entangling of the LiₓM_{y}SiO₄ material 110 and the carbon material 120. Meanwhile, it does not limit that the diameters of the skeleton at different parts are the same, the diameters of different parts of the skeleton of the same particle may be different.

As an example, the skeleton diameter of the carbon material 120 is 10nm-100nm, and the skeleton diameter of the LiₓM_{y}SiO₄ material 110 is 10nm-90nm. Alternatively, the skeleton diameter of the carbon material 120 is 100nm-300nm, and the skeleton diameter of the LiₓM_{y}SiO₄ material 110 is 90nm -200nm. Alternatively, the carbon material 120 has a skeleton diameter of 300nm-500nm, and the LiₓM_{y}SiO₄ material 110 has a skeleton diameter of 200nm-400nm. The diameter of the skeleton can be obtained by observing with a scanning electron microscope.

Referring to FIG. 1, the carbon material filled in the pores of the LiₓM_{y}SiO₄ material is also distributed on the outer surface of the LiₓM_{y}SiO₄ material, to form a carbon coating layer. The formation of the carbon coating layer, firstly, can make the conductivity of the anode material better; secondly, it can limit the volume expansion of nano-silicon 130; thirdly, it can also protect the internal structure, such that the structure of the entire material is more stable.

The carbon coating layer is explained below. For example, as shown in FIG. 1, the LiₓM_{y}SiO₄ material 110 with the porous structure has a diameter of D1 (although the LiₓM_{y}SiO₄ material 110 is a porous structure or a network structure, the basic outer contour is spherical, the diameter of the spherical outer contour is D1), then the diameter of the filled carbon filled in the porous LiₓM_{y}SiO₄ material is also D1 (the filled carbon is also a porous structure, but the basic outer contour is spherical, and the diameter of the spherical outer contour is D1), the particle size of the anode material is D2, then the carbon coating layer refers to the spherical area where D2 is located minus the spherical area where D1 is located in FIG. 1. The carbon coating layer refers to the carbon layer structure coated outside the LiₓM_{y}SiO₄ material 110, which basically does not entangle or fill with the LiₓM_{y}SiO₄ material 110.

Optionally, the thickness of the carbon coating layer is 5nm-80nm. The thickness of the carbon coating layer here refers to the thickness of the outermost layer of the carbon layer substantially without the LiₓM_{y}SiO₄ material 110, For example, the value of D in FIG. 1 is (D2-D1)/2. The coating carbon layer of this thickness, firstly, can make the structure of material comparatively stable; secondly, it can effectively limit the volume expansion of silicon; thirdly, it can also have a more reasonable mass proportion of nano-silicon 130 and LiₓM_{y}SiO₄ material 110, in order to obtain a better comprehensive performance of the anode material.

As an example, the thickness of the carbon coating layer can be 5nm-20nm. Alternatively, the thickness of the carbon coating layer can be 20nm-40nm. Alternatively, the thickness of the carbon coating layer can be 40nm-60nm. Alternatively, the thickness of the carbon coating layer can be 60nm-80nm. It should be noted that: as shown in FIG. 1, the carbon coating layer is roughly a spherical layered structure, and the thickness of different positions of the spherical shape may be the same or different, which is not limited in the present disclosure.

It should be noted that, in FIG. 1, whether it is the LiₓM_{y}SiO₄ with the network structure or the porous structure, the outer contour of the material 110 is a spherical structure, or the outer contour of the granular anode material is a spherical structure, which is only an exemplary shape or structure, which is not limited to a spherical structure. A spheroidal structure, or a solution of forming a granular shape falls within the scope of protection of the present disclosure.

Optionally, in the LiₓM_{y}SiO₄ material 110, 2≤x≤3.4, 0.4≤y≤1, and the values of x and y conform to charge balance.

In some possible embodiments, M includes Mg or/and Al. Firstly, it is easy to react with silicon oxide and metal oxide to obtain LiₓM_{y}SiO₄ material 110. Secondly, it has a wide range of sources and is relatively easy to obtain. Thirdly, its pre-lithiation effect is better, and the performance of the anode material is better.

Optionally, the LiₓM_{y}SiO₄ material 110 may be lithium magnesium silicate. Alternatively, the LiₓM_{y}SiO₄ material 110 may be lithium aluminum silicate. Alternatively, the LiₓM_{y}SiO₄ material 110 may be a mixture of lithium magnesium silicate and lithium aluminum silicate.

In other embodiments, M may further include Ca or/and Zn.

In some possible embodiments, the particle size of the nano-silicon 130 is 5nm-200nm; the nano-silicon 130 is more uniformly distributed on the LiₓM_{y}SiO₄ material 110, and the nano-silicon 130 of this particle size can be directly obtained by reducing silicon oxide, it is also easier to prepare.

Many nano-silicon 130 are distributed on the LiₓM_{y}SiO₄ material 110. At this time, the particle size of each nano-silicon 130 is not limited to be consistent. Generally speaking, the particle size of the nano-silicon 130 is basically within a range, and the particle distribution of the nano-silicon 130 is relatively uniform. As an example, the particle size of nano-silicon 130 is 5nm-50nm. Alternatively, the particle size of nano-silicon 130 is 50nm-100nm. Alternatively, the particle size of nano-silicon 130 is 100nm-150nm. Alternatively, the particle size of nano-silicon 130 is 150nm -200nm.

In some possible embodiments, the carbon material 120 includes one or more combinations of hard carbon and soft carbon.

In some possible embodiments, the specific surface area of the anode material is 1m²/g-3m²/g. The specific surface area of the anode material is small, and there are basically no pores or a small amount of pores, such that the structure of the entire anode material is more stable.

For example, the specific surface area of the anode material is 1m²/g, 1.5m²/g, 2m²/g, 2.5m²/g or 3m²/g.

Optionally, the shape of the anode material is spherical particle, and the average particle diameter D50 of the anode material is 5µm-30µm. The spherical particle here is not limited to a regular spherical shape, and it can be an irregular spherical particle. For example, there are a small amount of recesses on the surface, and the overall structure is an ellipsoid structure and the like. The average particle size here may refer to the average particle size of different particles, or may refer to the average particle size of the same particle in different directions, which is not limited here.

The average particle size D50 of the anode material with spherical particles is in the range of 5µm-30µm, which can make the size of the anode material more uniform, such that its capacity retention rate is higher and its performance is better. As an example, the average particle size D50 of the anode material is 5µm-10µm. Alternatively, the average particle size D50 of the anode material is 10µm-20µm. Alternatively, the average particle size D50 of the anode material is 20µm-30µm.

For example, the average particle diameter D50 of the anode material of spherical particles is 5µm, 8µm, 10µm, 15µm, 20µm, 25µm or 30µm.

In some possible embodiments, the LiₓM_{y}SiO₄ material 110 accounts for 5%-30% by mass of the anode material, the nano-silicon 130 accounts for 30%-60% by mass of the anode material, and the carbon material 120 accounts for 10%-65% by mass of the anode material. The contents of the LiₓM_{y}SiO₄ material 110, the nano-silicon 130 and the carbon material 120 are limited within the above range, which can have a more reasonable composition of the anode material and improve the overall performance of the anode material.

In one embodiment, the LiₓM_{y}SiO₄ material 110 accounts for 5%-10% by mass of the anode material, the nano-silicon 130 accounts for 30%-40% by mass of the anode material, and the carbon material 120 accounts for 50%-65% by mass of the anode material. In the range, the content of LiₓM_{y}SiO₄ material 110 is relatively small, and the content of nano-silicon 130 and carbon material 120 is relatively large, which can effectively improve the first efficiency of the anode material. Meanwhile, the more addition of carbon materials 120 can effectively limit the expansion of nano-silicon 130 during a charging and discharging process, such that the performance of the anode material is better.

In another embodiment, the LiₓM_{y}SiO₄ material 110 accounts for 10%-20% by mass of the anode material, the nano-silicon 130 accounts for 30%-40% by mass of the anode material, and the carbon material 120 accounts for 50%-60% by mass of the anode material.

In yet another embodiment, the LiₓM_{y}SiO₄ material 110 accounts for 20%-30% by mass of the anode material, the nano-silicon 130 accounts for 40%-60% by mass of the anode material, and the carbon material 120 accounts for 10%-30% by mass of the anode material.

For example, the LiₓM_{y}SiO₄ material 110 accounts for 5% by mass of the anode material, the nano-silicon 130 accounts for 60% by mass of the anode material, and the carbon material 120 accounts for 35% by mass of the anode material. Alternatively, the LiₓM_{y}SiO₄ material 110 accounts for 10% by mass of the anode material, the nano-silicon 130 accounts for 50% by mass of the anode material, and the carbon material 120 accounts for 40% by mass of the anode material. Alternatively, the LiₓM_{y}SiO₄ material 110 accounts for 20% by mass of the anode material, the nano-silicon 130 accounts for 45% by mass of the anode material, and the carbon material 120 accounts for 35% by mass of the anode material. Alternatively, the LiₓM_{y}SiO₄ material 110 accounts for 30% by mass of the anode material, the nano-silicon 130 accounts for 30% by mass of the anode material, and the carbon material 120 accounts for 40% by mass of the anode material.

The above-mentioned anode materials can be used to prepare lithium-ion batteries, and the lithium-ion batteries prepared have low volume expansion, high first efficiency and excellent rate performance.

The lithium-ion battery can be used to supply power to an electric device, and has better battery life.

After the anode material and its application are introduced above, its preparation method will be introduced below. The method includes: forming the LiₓM_{y}SiO₄ material with the porous structure or the network structure, filling the pores of the porous structure or the voids of the network structure of the LiₓM_{y}SiO₄ material, to obtain the anode material, wherein M includes a metal element capable of reducing silicon oxides, the metal element excludes Li.

The LiₓM_{y}SiO₄ material with porous structure or network structure is formed based on silicon oxide on the surface of nano-silicon, such that the distribution between nano-silicon and LiₓM_{y}SiO₄ material is more uniform, and nano-silicon is located in the matrix or/and on the surface of LiₓM_{y}SiO₄ material. After compounding with carbon material, the obtained anode material has better conductivity, more stable structure, lower volume expansion, higher conductivity, higher first efficiency and excellent rate performance.

The preparation method is described in detail below. FIG. 2 is a process flow chart illustrating a method for preparing an anode material according to an embodiment of the present disclosure. Referring to FIG. 2, the preparation method includes:

S110, mixing the silicon oxide and the binder, and then granulating to obtain a precursor 1. Granulation by adding a binder can, on the one hand, make the particles more uniform; on the other hand, it is easy to form a skeleton with a porous structure or a network structure subsequently.

Optionally, the silicon oxide and the binder are dispersed in the solution, and the precursor 1 is obtained by spray granulation. The dispersion of silicon oxide and binder can be made more uniform, so as to obtain particles with more uniform particle size.

In some possible embodiments, the mass ratio of silicon oxide to binder is (40-100):1. The content of silicon oxide is much higher than the content of the binder. The main component of the granulated precursor 1 is silicon oxide, and the binder is only used as a bonding material for granulation.

As an example, the mass ratio of silicon oxide to binder is (40-60):1. Alternatively, the mass ratio of silicon oxide to binder is (60-80):1. Alternatively, the mass ratio of silicon oxide to binder is (80-100):1. For example, the mass ratio of silicon oxide to binder is 40:1, 50:1, 60:1, 70:1, 80:1, 90:1 or 100:1, etc.

In some possible embodiments, the silicon oxide is one or more combinations of SiO, SiO2, and Si₂O₆. For example, silicon oxide is SiO₂, which is relatively stable and has more sources.

In some possible embodiments, the binder is one or more combinations selected from a group consisting of epoxy resin, phenolic resin, furfural resin, urea-formaldehyde resin, polyvinyl alcohol, polyvinyl chloride, polyethylene glycol, polyethylene oxide, polyvinylidene fluoride, glucose, sucrose, asphalt, polystyrene, polypyrrole, polyaniline, sodium carboxymethylcellulose, polyvinylpyrrolidone.

Optionally, the silicon oxide is dispersed in the aqueous solution, and stirred uniformly. The binder is added into the solution, the mass ratio of the silicon oxide to the binder is (40-60):1, continued to stir uniformly and then spray granulated, to obtain precursor 1.

S120, mixing the precursor 1, metal M powder and molten salt, and conducting a thermal reaction such that at least part of the silicon oxide is reduced to nano-silicon to obtain precursor 2. M includes a metal element capable of reducing silicon oxide, the metal element excludes Li. During the thermal reaction, the silicon oxide is reduced to nano-silicon by the metal M, and the metal M is converted into a metal M oxide, and the formed particles basically have a structure in which the inner shell is nano-silicon and the surface layer is metal M oxide, and, molten salt is distributed between the particles.

It should be noted that this does not limit that all silicon oxides are reduced, and it does not limit that the surface layer of nano-silicon is all attached to metal M oxides. In the actual production process, most of the silicon oxides are reduced, the metal M oxide on the nano-silicon generally covers part of the surface layer of the nano-silicon, and there may be part of the surface of the nano-silicon exposed.

Meanwhile, molten salts is distributed among not all nano-silicon particles (its interior is nano-silicon, and a surface layer is metal oxide particles) and particles, molten salt can be distributed among a part of nano-silicon, or can combine a part of nano-silicon and nano-silicon together.

The addition of molten salt can control the reaction situation of the thermal reaction and avoid reacting violently to a certain extent. Meanwhile, it can also avoid the bonding or agglomeration between the particles, such that the final anode material with more uniform particles can be formed, and the reaction is also easier to control. The formation of a porous structure can be also facilitated after the molten salt is subsequently removed.

In some possible embodiments, the mass ratio of the precursor 1, the molten salt and the metal M powder is 1:(3-8):(0.5-1) sequentially. The molten salt has a large content, and it basically does not participate the reaction. After the subsequent removal of molten salt, a porous structure or network structure can be formed for preparing the anode materials. The mass ratio of the precursor 1 to the metal M powder is within the above range, such that more silicon oxide is reduced, and nano-silicon is obtained.

As an example, the mass ratio of precursor 1, molten salt and metal M powder is 1:(3-5):(0.8-1). Alternatively, the mass ratio of precursor 1, molten salt and metal M powder is 1:(5-8):(0.5-0.8). Alternatively, the mass ratio of precursor 1, molten salt and metal M powder is 1:(3-6):(0.5-0.7).

For example, the mass ratio of precursor 1, molten salt and metal M powder is 1:3:0.8, 1:4:0.8, 1:5:0.8, 1:6:0.8, 1:7:0.8, 1:8 :0.8, 1:3:0.9, 1:4:0.9, 1:5:0.9, 1:6:0.9, 1:7:0.9, 1:8:0.9, 1:3:1, 1:4:1, 1:5:1, 1:6:1, 1:7:1 or 1:8:1, etc.

In some possible embodiments, the metal M powder includes one or more combinations of Mg powder, Al powder and MgAl alloy powder. Due to the redox reaction in the process of thermal reaction, metal M powder is in contact with silicon oxide, and the formed metal M oxide is mostly formed on the surface of nano-silicon, but not all metal M oxide is formed on the surface of nano-silicon. Part of the M oxide may be not formed on the surface of the nano-silicon, which is not limited here.

In other embodiments, the metal M powder may further include calcium powder, zinc powder, and the like.

In some possible embodiments, the molten salt is one or more selected form a group consisting of magnesium chloride, sodium chloride, potassium chloride, calcium chloride, copper chloride, sodium sulfate, calcium sulfate, barium sulfate, aluminum sulfate, sodium nitrate, potassium nitrate, ammonium nitrate, calcium nitrate, lead nitrate, cerium nitrate, sodium fluoride, potassium fluoride, and calcium fluoride.

Optionally, the thermal reaction conditions are: reacting at a temperature of 400°C-800°C in an inert gas atmosphere for 1h-10h. During the reaction in an inert gas atmosphere, the metal M powder will not be oxidized by oxygen basically, but has a redox reaction with silicon oxide, such that silicon oxide is converted into nano-silicon. The temperature and duration of thermal reaction are within the above range, making the reduction effect of silicon oxide better.

As an example, the conditions of the thermal reaction are: in a nitrogen atmosphere, reacting at a temperature of 400°C-500°C for 8h-10h; alternatively, in a nitrogen atmosphere, reacting at a temperature of 500°C-600°C for 6h -8h; alternatively, in a nitrogen atmosphere, reacting at a temperature of 600-700°C for 1h-6h; alternatively, in a nitrogen atmosphere, react at a temperature of 700°C-800°C for 1h-6h.

Optionally, the precursor 1, metal M powder and molten salt are mixed, the mass ratio of precursor 1, molten salt and metal M powder is 1:(3-8):(0.5-1.5). After mixing, they are placed in a nitrogen atmosphere, reacting at a temperature of 400°C-800°C for 1h-10h to obtain the precursor 2.

S130, the precursor 2 is pickled to remove part of the metal M oxide, so as to form the precursor 3. The pickling step is carried out in an acid solution. After the precursor 2 is mixed with the acid solution, part of the metal M oxide on the surface of the nano-silicon is dissolved in the acid solution. The molten salt is dissolved in the acid solution to form agglomerate of nano-silicon as a porous structure or network structure, the surface of nano-silicon may be partly attached by metal M oxide, and partly exposed. The precursor 3 is a skeleton material with a network structure or a porous structure, and the skeleton material includes nano-silicon, silicon oxide and metal M oxide loaded on the surface of nano-silicon. The silicon oxide can be unreduced silicon oxide, or can also be the silicon oxide formed naturally on the surface layer after the nano-silicon is exposed.

In some possible embodiments, the acid solution is one or more combinations of nitric acid solution, hydrochloric acid solution and sulfuric acid solution.

Optionally, the mass concentration of the nitric acid solution is 5%-15%; the mass concentration of the hydrochloric acid solution is 5%-15%; and the mass concentration of the sulfuric acid solution is 5%-15%.

Optionally, the additive amount of the acid solution is 10%-120% of the mass of the precursor 2. As an example, the additive amount of the acid solution is 10%-30% of the mass of the precursor 2. Alternatively, the additive amount of the acid solution is 30%-50% of the mass of the precursor 2. Alternatively, the additive amount of the acid solution is 50%-80% of the mass of the precursor 2. Alternatively, the additive amount of the acid solution is 80%-120% of the mass of the precursor 2.

For example, the additive amount of the acid solution is 10%, 20%, 30%, 40%, 50%, 60%, 70%, 80%, 90%, 100%, 110% or 120% of the mass of the precursor 2.

Optionally, the precursor 2 is mixed with a hydrochloric acid solution with a mass concentration of 5%-15% and immersed for 0.3h-1h. By cooperating the concentration of the acid solution and the duration of immersion, part of the metal oxide can be removed, and then with water for solid-liquid separation to remove impurities (the manner of solid-liquid separation can be centrifugation, filtration, suction filtration, etc.), and then dried to obtain a skeleton material having the porous structure or network structure. The skeleton material includes nano-silicon, silicon oxide and metal M oxides loaded on the surface of nano-silicon.

It should be noted that step S110-step S130 may or may not be implemented, and the skeleton material with porous structure or network structure may also be obtained by using other manners.

S140, the precursor 3 is mixed with lithium salt and is sintered to obtain LiₓM_{y}SiO₄ material with porous structure or network structure. The nano-silicon is distributed in the matrix of the LiₓM_{y}SiO₄ material or/and on the surface of the LiₓM_{y}SiO₄ material, and the values of x and y satisfy charge balance.

Using a certain concentration of acid solution to immerse the precursor 2 for a certain period of time can remove part of the metal M oxide in the precursor 2, expose more nano-silicon, and form a pore structure (a skeleton with a porous structure or a network structure). After the lithium salt is mixed with the precursor 3, the lithium salt will be in contact with nano-silicon, metal M oxide and silicon oxide (the silicon oxide can be unreduced silicon oxide, or silicon oxide naturally formed on the surface after the nano-silicon is exposed). When sintering, part of silicon oxide, metal M oxide and lithium salt react to obtain LiₓM_{y}SiO₄ material with porous structure or network structure. At this time, the LiₓM_{y}SiO₄ material is distributed with nano-silicon in the matrix or/and on the surface.

In some possible embodiments, the lithium salt is one or more combinations selected from a group consisting of lithium acetate, lithium oxalate, lithium carbonate, lithium hydroxide, lithium formate, lithium benzoate, lithium chloride, lithium sulfate, and lithium nitrate.

Optionally, the sintering conditions are: sintering for 1h-10h in an inert gas atmosphere at a temperature of 600°C-1200°C. As an example, the sintering conditions are: in a nitrogen atmosphere, reacting at a temperature of 600°C-800°C for 8h-10h; alternatively, in a nitrogen atmosphere, reacting at a temperature of 800°C-1000°C for 5h -8h; alternatively, in a nitrogen atmosphere, reacting at a temperature of 1000°C-1200°C for 1h-5h.

Optionally, the precursor 3, soluble lithium salt and water are mixed, stirred uniformly and then dried. In an inert gas atmosphere, the temperature is 600°C-1200°C and fired for 1h-10h to obtain the LiₓM_{y}SiO₄ material.

Mixing soluble lithium salt with precursor 3 in water can make the surface of precursor 3 uniformly adsorb a layer of soluble lithium salt. After drying, the lithium salt is adsorbed on the surface of precursor 3, which is beneficial to control the amount of LiₓM_{y}SiO₄ material during subsequent sintering, and can also make the nano-silicon uniformly distributed on the LiₓM_{y}SiO₄ material.

S150, a carbon material is formed in the pores of the LiₓM_{y}SiO₄ material to obtain the anode material. Since the LiₓM_{y}SiO₄ material is a porous structure or a network structure, and there are nano-silicon distributed in the matrix or/and surface of the LiₓM_{y}SiO₄ material, many pores are provided inside the LiₓM_{y}SiO₄ material, and carbon materials are formed in the pores of the LiₓM_{y}SiO₄ material, the carbon material is filled or entangled with the LiₓM_{y}SiO₄ material, obtaining the anode material. If carbon material is formed with a more mass, a carbon coating layer can be formed on the surface, and an anode material with better performance can be obtained.

In one embodiment, the LiₓM_{y}SiO₄ material is mixed with an organic carbon source and calcined to carbonize the organic carbon source to form a carbon material. After the LiₓM_{y}SiO₄ material is mixed with the organic carbon source, a part of the organic carbon source will enter the pores of the LiₓM_{y}SiO₄ material, and a part of the organic carbon source will be coated on the surface of the LiₓM_{y}SiO₄ material. During calcination, carbon material can be formed for filling with the LiₓM_{y}SiO₄ material, and can form a carbon coating layer on the surface.

The organic carbon source is one or more combinations selected from a group consisting of polymers, sugars, organic acids, asphalt and polymer materials. For example, the organic carbon source is polyvinyl chloride, polyvinyl butyral, sucrose, glucose, citric acid, asphalt, furfural resin, epoxy resin, phenolic resin, and polyacrylic acid, etc.

Optionally, the mixing manner of the LiₓM_{y}SiO₄ material and the organic carbon source can be hot-press coated, and the LiₓM_{y}SiO₄ material and the organic carbon source are mixed uniformly and then placed in a sintering furnace. In an inert gas atmosphere, under a pressure of 5Mpa-20Mpa and at a temperature of 700°C-1200°C, they are calcined for 1h-10h to carbonize the organic carbon source.

By means of hot-press coating, the organic carbon source can be hot-pressed into the pores or voids of the porous LiₓM_{y}SiO₄ material, such that after the subsequent carbonization of the organic carbon source, carbon materials can be filled in the pores or voids of the porous LiₓM_{y}SiO₄ material.

As an example, the conditions for carbonizing the organic carbon source are: in a nitrogen atmosphere, reacting at a temperature of 700°C-800°C for 8h-10h; alternatively, in a nitrogen atmosphere, reacting at a temperature of 800°C-1000°C for 5h-8h; alternatively, in a nitrogen atmosphere, reacting at a temperature of 1000°C-1200°C for 1h-5h.

The pressure of the hot press sintering furnace is 5Mpa-20Mpa which is relatively high. Since the volume of the organic carbon source will decrease after the carbonization of the organic carbon source during the calcination process, the carbon material can be hot pressed into the LiₓM_{y}SiO₄ material with the porous structure while performing calcination, such that the entanglement between the carbon material formed with a porous structure and the LiₓM_{y}SiO₄ material with a porous structure is tighter, the filling is tighter, and the performance of the anode material is better.

As an example, the conditions for the carbonization of the organic carbon source are: in an inert gas atmosphere, reacting with a pressure of 5Mpa-10Mpa and at a temperature of 700°C-800°C for 8h-10h; alternatively, in an inert gas atmosphere, reacting with a pressure of 10Mpa-15Mpa and at a temperature of 800°C-1000°C for 5h-8h; alternatively, in an inert gas atmosphere, reacting with a pressure of 15Mpa-20Mpa and at a temperature of 1000°C-1200°C for 1h-5h.

In another embodiment, the LiₓM_{y}SiO₄ material is placed in a chemical vapor deposition furnace, and carbon materials are formed in the pores and surfaces of the LiₓM_{y}SiO₄ material by chemical vapor deposition. The carbon material is formed by chemical vapor deposition and filled in the pores of the LiₓM_{y}SiO₄ material. The filling effect of the carbon material is good. Even if the pores are small, the carbon material can enter the porous structure of the LiₓM_{y}SiO₄ material through the gas source to form LiₓM_{y}SiO₄ material with the porous structure and the carbon material with the porous structure that are entangled.

Optionally, the conditions of the chemical vapor deposition method are: using acetylene, methane or acetone as the carbon source; using argon or nitrogen as the protective gas; and vapor depositing at 750°C-1200°C.

It should be noted that the aforementioned step S140 and step S150 are performed twice through sintering and calcination separately, but the present disclosure does not limit it to be performed twice, and it can also be prepared through one heat treatment.

Optionally, the precursor 3 is mixed with the lithium salt and the organic carbon source, and then heat-treated to obtain the anode material. The precursor 3 is a skeleton material with a porous structure or a network structure, and the skeleton material includes nano-silicon, silicon oxides and metal oxides on the surface of the nano-silicon.

During the heat treatment, part of the nano-silicon, silicon oxide, and metal oxide can be reacted with lithium salt to obtain the LiₓM_{y}SiO₄ material with a porous structure or a network structure. Meanwhile, the organic carbon source can be carbonized to make the carbonized carbon material be filled or entangled with the LiₓM_{y}SiO₄ material.

Optionally, the precursor 3 is mixed with a lithium salt, then mixed with an organic carbon source and then subjected to heat treatment to obtain the anode material. For example, the precursor 3, the soluble lithium salt and water are mixed, stirred uniformly and then dried; then the organic carbon source is coated on its surface and interior, and heat-treated at a temperature of 700°C-1200°C in an inert gas atmosphere for 1h-10h, the organic carbon source is carbonized to form a carbon material, and at the same time, the lithium salt is reacted to obtain the LiₓM_{y}SiO₄ material.

The anode material prepared by the above method includes LiₓM_{y}SiO₄ materials and carbon materials that are entangled or filled with each other, and nano-silicon is distributed in the matrix of the LiₓM_{y}SiO₄ material or/and on the surface of the LiₓM_{y}SiO₄ material, which can make the structure of the anode material more stable and has a relatively low volume expansion, high conductivity, high first efficiency and excellent rate performance.

In order to make the objects, technical solutions and advantages of the embodiments of the present disclosure apparent, the technical solutions in the embodiments of the present disclosure will be clearly and completely described below. Those who do not indicate the specific conditions in the examples are carried out according to the conventional conditions or the conditions suggested by the manufacturer. The reagents or instruments used without specifying the manufacturer are all conventional products that are commercially available.

### Example 1

A method for preparing an anode material includes following steps.
(1) 500g of nano-silicon was dispersed in 10Kg of aqueous solution, and stirred uniformly, and then 10g of sodium carboxymethyl cellulose was added to it, stirred uniformly, and spray granulated to obtain a precursor 1.
(2) The precursor 1 was mixed with molten sodium chloride and magnesium powder in a mass ratio of the precursor 1, sodium chloride and magnesium powder is 1:5:0.8; after mixing uniformly, it was placed in a nitrogen atmosphere to react at 700°C for 5h, to obtain a precursor 2.
(3) The precursor 2 is placed in an aqueous solution in a ratio of the precursor 2 to water was 1:4; after stirring uniformly, industrial hydrochloric acid solution with a weight ratio 1:1 to the precursor 2 was added, reacted for 0.5h, then centrifuged, and washed with water to remove impurities to obtain a precursor 3.
(4) The precursor 3 was dispersed in the aqueous solution, a ratio of skeleton material to water is 1:5; and lithium carbonate having a weight ratio 10:1 to the skeleton material was added, the solvent was evaporated to dryness under stirring conditions, to obtain a precursor 4.
(5) The precursor 4 was placed in a rotary furnace, and sintered at 1100°C for 3 hours under inert gas conditions to obtain a precursor 5.
(6) The precursor 5 was placed in a hot-pressed sintering furnace after mixed with asphalt, and calcined at 800°C for 3 hours under a pressure of 10MPa, the calcined material was pulverized and sieved to obtain the anode material.

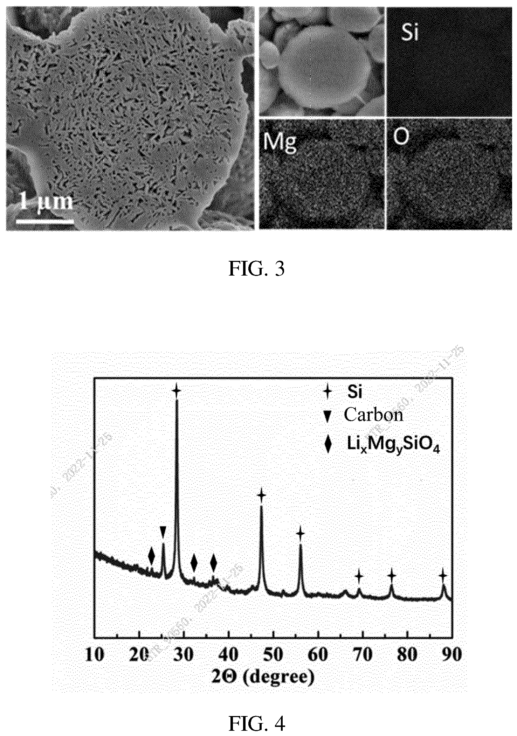

FIG. 3 is an SEM photograph (the left shown in FIG. 3) and an EDS image (the right shown in FIG. 3) of the precursor 5 in Example 1. It can be seen from FIG. 3 that the precursor 5 is a porous structure, and it contains lithium magnesium silicate material and nano-silicon, and the nano-silicon is uniformly dispersed in the matrix of lithium magnesium silicate.

FIG. 4 is an XRD image of the anode material provided by Example 1. As can be seen from FIG. 4, the anode material provided by Example 1 contains LixMgySiO₄ material, carbon material and nano-silicon.

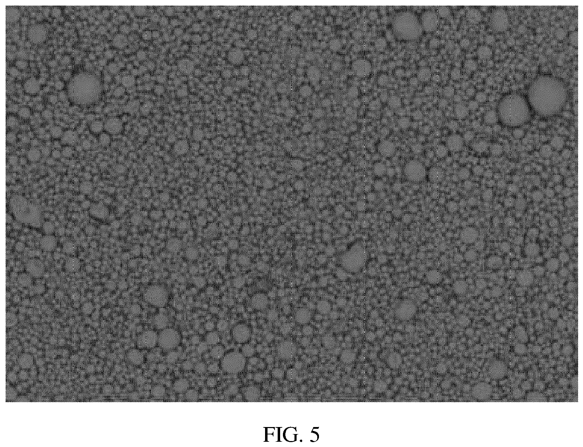

FIG. 5 is a SEM photograph of the anode material provided in Example 1. It can be seen from FIG. 5 that the anode material is relatively uniform and has a carbon coating layer on its surface.

Combining the above drawings and method analysis, it can be seen that the anode material obtained in this Example includes: a first skeleton and a second skeleton that are entangled with each other, and nano-silicon. The first skeleton is a magnesium lithium silicate material with a network structure, and the second skeleton is a carbon material with a network structure. Nano-silicon is distributed in the matrix of the lithium magnesium silicate material and on the surface of the lithium magnesium silicate material.

Combining the above drawings and method analysis, it can be seen that the anode material obtained in Example 1 includes a lithium magnesium silicate material, a carbon material and nano-silicon. The lithium magnesium silicate material has a porous structure, and the carbon material is filled in the pores of the lithium magnesium silicate material. Nano-silicon is distributed in the matrix of the lithium magnesium silicate material and on the surface of the lithium magnesium silicate material.

### Example 2

The method steps of the Example 2 were basically the same as those of Example 1, the difference lies in that step (5) and step (6) are merged as follows: the precursor 4 was mixed in a hot-pressed sintering furnace after being mixed with asphalt, heat-treated under a pressure of 10MPa at 800° C for 3h, the material after heat treatment was pulverized and sieved to obtain an anode material.

Combining the SEM, EDS images and XRD images, as well as the analysis of the method steps, it can be seen that through one heat treatment, lithium carbonate can be reacted to obtain magnesium lithium silicate material, and asphalt can be carbonized to obtain carbon material, and the two can have a structure entangled or filled.

The anode material obtained in Example 2 includes a first skeleton and a second skeleton that are entangled with each other, and nano-silicon. The first skeleton is a magnesium lithium silicate material with a network structure, and the second skeleton is a carbon material with a network structure. Nano-silicon is distributed in the matrix of the lithium magnesium silicate material and on the surface of the lithium magnesium silicate material.

The anode material obtained in Example 2 includes a lithium magnesium silicate material, a carbon material and nano-silicon. The lithium magnesium silicate material has a porous structure, and the carbon material is filled in the pores of the lithium magnesium silicate material. The nano-silicon is distributed in the matrix of the lithium magnesium silicate material and on the surface of the lithium magnesium silicate material.

### Example 3

The method steps of the Example 3 were basically the same as those of Example 1, the difference lies in that in step (6), the precursor 5 was placed in a sintering furnace after mixed with asphalt, calcined at 800°C for 3 hours, and the calcined material was pulverized and sieved, to obtain an anode material.

Combining the SEM, EDS images and XRD images, as well as the analysis of the method steps, it can be seen that through one in the process of calcination, even if no hot pressing treatment is performed, carbon materials can be obtained by carbonizing the asphalt through calcination, and the carbon materials can be filled in the pores of lithium magnesium silicate material.

The anode material obtained in Example 3 includes a first skeleton and a second skeleton that are entangled with each other, and nano-silicon. The first skeleton is a magnesium lithium silicate material with a network structure, and the second skeleton is a carbon material with a network structure. Nano-silicon is distributed in the matrix of the lithium magnesium silicate material and on the surface of the lithium magnesium silicate material.

The anode material obtained in Example 3 includes a lithium magnesium silicate material, a carbon material and nano-silicon. The lithium magnesium silicate material has a porous structure, and the carbon material is filled in the pores of the lithium magnesium silicate material. The nano-silicon is distributed in the matrix of the lithium magnesium silicate material and on the surface of the lithium magnesium silicate material.

### Example 4

The method steps of the present example were basically the same as those of Example 1, the difference lies in that in step (6): the precursor 5 was placed in a chemical vapor deposition furnace into which methane is introduced, deposited at 800°C for 3 hours, and the deposited material was pulverized and sieved, to obtain an anode material.

Combining the SEM, EDS images and XRD images, as well as the analysis of the method steps, it can be seen that the carbon material can also be formed in the pores or voids of the lithium magnesium silicate material by chemical vapor deposition.

The anode material obtained in the present example includes a first skeleton and a second skeleton that are entangled with each other, and nano-silicon. The first skeleton is a magnesium lithium silicate material with a network structure, and the second skeleton is a carbon material with a network structure. Nano-silicon is distributed in the matrix of the lithium magnesium silicate material and on the surface of the lithium magnesium silicate material.

The anode material obtained in the present example includes a lithium magnesium silicate material, a carbon material and nano-silicon. The lithium magnesium silicate material has a porous structure, and the carbon material is filled in the pores of the lithium magnesium silicate material. The nano-silicon is distributed in the matrix of the lithium magnesium silicate material and on the surface of the lithium magnesium silicate material.

### Example 5

The method steps of Example 5 were basically the same as those of Example 1, the difference lies in that in step (2), the precursor 1 was mixed with sodium chloride and aluminum powder in which a mixing mass ratio of precursor 1, sodium chloride and aluminum powder is 1:5:0.9 in order; after mixing uniformly, they were placed in a nitrogen atmosphere at 700°C for 5 hours to obtain a precursor 2.

Combining SEM, EDS images and XRD images, as well as the analysis of the method steps, it can be seen that the method uses aluminum powder to reduce silicon dioxide, and finally forms a lithium aluminum silicate material.

The anode material obtained in the present example includes a first skeleton, a second skeleton entangled with each other, and nano-silicon. The first skeleton is a lithium aluminum silicate material with a network structure, and the second skeleton is a carbon material with a network structure. The nano-silicon is distributed in the matrix and on the surface of the lithium aluminum silicate material.

The anode material obtained in the present example includes a lithium aluminum silicate material, a carbon material and nano-silicon. The lithium magnesium silicate material has a porous structure, and the pores of the lithium aluminum silicate material are filled with carbon materials. The nano-silicon is distributed in the matrix of the lithium magnesium silicate material and on the surface of the lithium magnesium silicate material.

### Example 6

The method steps of the present example were basically the same as those of Example 1, the difference lies in that in step (2): the precursor 1 was mixed with sodium chloride, magnesium powder, and aluminum powder where a mixing mass ratio precursor 1, sodium chloride, and magnesium power and aluminum powder is 1:5:0.45:0.4, and after mixing uniformly, they were placed in a nitrogen atmosphere at 700°C for 5 hours to obtain a precursor 2.

Combining the SEM, EDS images, and XRD images, as well as the analysis of the method steps, it can be seen that the method uses aluminum powder and magnesium powder to simultaneously reduce silicon dioxide, and finally forms a lithium aluminum silicate material and a lithium magnesium silicate material.

The anode material obtained in Example 6 includes a first skeleton and a second skeleton that are entangled with each other, and nano-silicon. The first skeleton is a mixing material of lithium aluminum silicate and lithium magnesium silicate with a network structure, and the second skeleton is a carbon material with a network structure. The nano-silicon is distributed in the matrix and on the surface of the mixing material of lithium aluminum silicate and lithium magnesium silicate.

The anode material obtained in Example 6 includes a mixing material of lithium aluminum silicate and lithium magnesium silicate, a carbon material and nano-silicon. The mixed material of lithium magnesium silicate and lithium magnesium silicate has a porous structure, and the carbon material was filled in the pores of the lithium aluminum silicate material. The nano-silicon is distributed in the matrix and on the surface of the mixing material of lithium aluminum silicate and lithium magnesium silicate.

### Example 7

The method steps of Example 7 were basically the same as those of Example 1, the difference lies in following steps.

Step (3): the precursor 2 was placed in an aqueous solution, where a ratio of the precursor 2 to water is 1:4, after stirring uniformly, an industrial hydrochloric acid solution with a weight ratio of 10:8 to the precursor 2 was added thereto, and centrifuged after reacting for 0.5h, impurities were removed by washing with water to obtain a precursor 3.

Step (4): the precursor 3 was dispersed in the aqueous solution, where the ratio of the skeleton material to water is 1:5, lithium carbonate with a weight ratio 8:1 to the skeleton material was added, and the solvent was evaporated to dryness under stirring conditions to obtain a precursor 4.

The anode material obtained in Example 7 includes a first skeleton and a second skeleton that are entangled with each other, and nano-silicon. The first skeleton is a magnesium lithium silicate material with a network structure, and the second skeleton is a carbon material with a network structure. The nano-silicon is distributed in the matrix of the lithium magnesium silicate material and on the surface of the lithium magnesium silicate material.

The anode material obtained in the present example includes a lithium magnesium silicate material, a carbon material and nano-silicon. The lithium magnesium silicate material has a porous structure, and the carbon material is filled in the pores of the lithium magnesium silicate material. The nano-silicon is distributed in the matrix of the lithium magnesium silicate material and on the surface of the lithium magnesium silicate material.

### Example 8

The method steps of the present example were basically the same as those of Example 1, the difference lies in that: step (1): 500g of nano-silicon was dispersed in 10Kg of aqueous solution, 40g of sodium carboxymethyl cellulose was added thereto after stirring uniformly; after stirring uniformly, it was sprayed and granulated to obtain a precursor 1. Step (6): the precursor 5 was placed in a chemical vapor deposition furnace into which methane was introduced, was deposited at 800° C for 5 hours; and the deposited material was pulverized and sieved to obtain an anode material.

The anode material obtained in Example 8 includes a first skeleton and a second skeleton that are entangled with each other, and nano-silicon. The first skeleton is a magnesium lithium silicate material with a network structure, and the second skeleton is a carbon material with a network structure. The nano-silicon is distributed in the matrix of the lithium magnesium silicate material and on the surface of the lithium magnesium silicate material.

The anode material obtained in the present example includes a lithium magnesium silicate material, a carbon material and nano-silicon. The lithium magnesium silicate material has a porous structure, and the carbon material is filled in the pores of the lithium magnesium silicate material. The nano-silicon is distributed in the matrix of the lithium magnesium silicate material and on the surface of the lithium magnesium silicate material.

### Example 9

The method steps of Example 9 were basically the same as those of Example 1, the difference lies in that: (6) the precursor 5 was placed in a hot-pressed sintering furnace after being mixed with asphalt, and was calcined under a pressure of 30MPa at 800°C for 3 hours; and the calcined material was pulverized and sieved to obtain an anode material.

The anode material obtained in Example 9 includes a first skeleton and a second skeleton that are entangled with each other, and nano-silicon. The first skeleton is a magnesium lithium silicate material with a network structure, and the second skeleton is a carbon material with a network structure. The nano-silicon is distributed in the matrix of the lithium magnesium silicate material and on the surface of the lithium magnesium silicate material.

The anode material obtained in Example 9 includes a lithium magnesium silicate material, a carbon material and nano-silicon. The lithium magnesium silicate material has a porous structure, and the carbon material is filled in the pores of the lithium magnesium silicate material. The nano-silicon is distributed in the matrix of the lithium magnesium silicate material and on the surface of the lithium magnesium silicate material.

### Example 10

The method steps of Example 10 were basically the same as those of Example 1, the difference lies in that: (6) the precursor 5 was placed in a hot-pressed sintering furnace after mixed with asphalt, and was calcined under normal pressure at 800°C for 3 hours; and the calcined material was pulverized and sieved to obtain an anode material.

The anode material obtained in Example 10 includes a first skeleton and a second skeleton that are entangled with each other, and nano-silicon. The first skeleton is a magnesium lithium silicate material with a network structure, and the second skeleton is a carbon material with a network structure. The nano-silicon is distributed in the matrix of the lithium magnesium silicate material and on the surface of the lithium magnesium silicate material.

The anode material obtained in Example 10 includes a lithium magnesium silicate material, a carbon material and nano-silicon. The lithium magnesium silicate material has a porous structure, and the carbon material is filled in the pores of the lithium magnesium silicate material. The nano-silicon is distributed in the matrix of the lithium magnesium silicate material and on the surface of the lithium magnesium silicate material.

**Table 1: Anode Materials (anodes) provided by Examples 1-10**

| | Thickn ess of carbon coating layer (nm) | Specifi c surface area of anode( m²/g) | D50 of anode (µm) | Mass percentage of LiₓM_{y}SiO₄ material (%) | Mass percent age of nano-si licon (%) | Mass percent age of carbon material (%) | Porosity of LiₓM_{y}Si O₄ material (%) | Skeleton diameter distribution range of LiₓM_{y}SiO₄ material (nm) | Distribution range of skeleton diameter of carbon material (nm) |
|---|---|---|---|---|---|---|---|---|---|
| Example 1 | 30.0 | 2.5 | 7.0 | 5.02 | 54.26 | 39.2 | 35 | 10-400 | 10-500 |
| Example 2 | 30.0 | 2.8 | 7.1 | 5.10 | 54.80 | 38.9 | 34 | 10-400 | 10-500 |
| Example 3 | 33.0 | 3.1 | 7.3 | 5.20 | 54.40 | 39.1 | 36 | 10-400 | 10-500 |
| Example 4 | 28.0 | 2.2 | 6.9 | 5.30 | 53.50 | 39.8 | 32 | 10-400 | 10-500 |
| Example 5 | 30.0 | 2.4 | 7.1 | 6.50 | 51.30 | 39.4 | 39 | 10-400 | 10-500 |
| Example 6 | 30.5 | 2.6 | 7.2 | 6.80 | 52.30 | 38.8 | 42 | 10-400 | 10-500 |
| Example 7 | 30.0 | 2.1 | 7.6 | 8.2 | 51.3 | 38.6 | 33 | 60-700 | 10-500 |
| Example 8 | 35 | 1.9 | 7.9 | 4.5 | 54.3 | 40.7 | 32 | 10-400 | 50-800 |
| Example 9 | 30.2 | 2.3 | 7.1 | 5.06 | 54.1 | 39.7 | 26 | 10-400 | 10-500 |
| Example 10 | 30.1 | 4.8 | 7.3 | 5.03 | 54.13 | 39.5 | 50 | 10-400 | 10-500 |

It should be noted that the sum of the mass percentages of LiₓM_{y}SiO₄ material, the nano-silicon and the carbon material is close to and less than 100%. The reason is that: when preparing the anode material, it is very likely to contain one or more impurities, e.g., one or more impurities from silicon oxide, MgO, by-product MgSiO₄, and the like that are incompletely reacted.

The method for testing the thickness of the carbon coating layer is: section SEM test.

The method for testing the specific surface area of the anode material is: Mike specific surface analyzer.

The method for testing D50 of the anode material is: Malvern laser particle size analyzer 3000.

The method for testing the mass percentage of LiₓM_{y}SiO₄ material is: total dissolved component analysis method.

The test method for the mass percentage of nano-silicon is: X-ray fluorescence analysis method.

The test method for the mass percentage of carbon materials is: infrared carbon and sulfur analyzer.

The method for testing porosity is: the porosity is measured by mercury intrusion method. The porosity is measured at least three times, and the arithmetic average of at least three times is used as the measurement result.

The method for testing the distribution range of the skeleton diameter: the skeleton diameter is measured at different points in the fixed area by scanning electron microscope, and the distribution range of the skeleton diameter is obtained.

### Comparative Example 1

The method steps of the Comparative Example 1 were basically the same as those of Example 1, the difference lies in that step (4) is omitted, and finally no lithium magnesium silicate material is formed.

### Comparative Example 2

The method steps of the Comparative Example 2 were basically the same as those of Example 1, the difference lies in that step (4) and step (6) are omitted, and finally no lithium magnesium silicate material and carbon material are formed.

### Comparative Example 3

The method steps of the Comparative Example 3 were basically the same as those of Example 1, the difference lies in that in step (2), no molten sodium chloride is added, and no porous structure or network structure is formed.

### Comparative Example 4

The method steps of the Comparative Example 4 were basically the same as those of Example 1, the difference lies in that the hydrochloric acid cleaning reaction in step (3) is omitted, and no porous magnesium lithium silicate material is formed.

Table 2 shows the performances of the anode materials provided in Examples 1-6 and Comparative Examples 1-4.

Each composite anode material of Examples 1-6 and Comparative Examples 1-4 is mixed with a conductive agent and a binder in a solvent at a mass percentage of 93:2:5, and the obtained mixed slurry is coated on the copper foil current collector, vacuum-dried to obtain the anode plate; then 1mol/L of LiPF6/EC+DMC+EMC (v/v=1:1:1) electrolyte, SK (12µm) diaphragm, shell are assembled with a CR2016 button battery by a conventional process. The current density 1C in the electrochemical performance test is equal to 1000 mAh/g. Under the condition of 0.1C, the capacity and first efficiency of each material are tested. Under the condition of 1C charge-discharge, the cycle retention rate and the volume expansion rate after 100 charge-discharge cycles are tested.

**Table 2: Performances of anode materials (anodes)**

| | Capacity (mAh/g) | First efficiency (%) | Cycle retention rate (%) after 100 cycles | Volume Expansion rate (%) |
|---|---|---|---|---|
| Example 1 | 1580 | 87.8 | 93.0 | 34.0 |
| Example 2 | 1575 | 87.4 | 92.8 | 33.8 |
| Example 3 | 1560 | 87.1 | 91.5 | 35.7 |
| Example 4 | 1585 | 87.9 | 93.5 | 33.7 |
| Example 5 | 1565 | 87.6 | 92.9 | 33.8 |
| Example 6 | 1585 | 87.4 | 93.1 | 33.6 |
| Example 7 | 1430 | 86.9 | 92.4 | 34.6 |
| Example 8 | 1454 | 86.8 | 92.1 | 34.7 |
| Example 9 | 1570 | 86.9 | 91.5 | 37.0 |
| Example 10 | 1560 | 86.8 | 90.0 | 35.6 |
| Comparative Example 1 | 1670 | 82.6 | 84.0 | 45.0 |
| Comparative Example 2 | 1850 | 83.5 | 76.0 | 53.0 |
| Comparative Example 3 | 1560 | 86.3 | 86.0 | 38.0 |
| Comparative Example 4 | 600 | 78.0 | 78.0 | 42.0 |

From the method for preparing the anode material, Table 1 and Table 2, it can be seen that each anode material provided by the examples of the present disclosure has a high first efficiency, a high cycle retention rate, and a small volume expansion coefficient.

By comparing the Example 1 with the Comparative Example 1, it can be seen that since the lithium carbonate is not added to prepare the lithium magnesium silicate material in Comparative Example 1, the first efficiency is low, and the cycle retention rate is low. Meanwhile, due to the absence of the limitation of lithium magnesium silicate material, the volume expansion coefficient of anode materials is relatively high.

By Comparing the Example 1 and the Comparative Example 2, it can be seen that in Comparative Example 2, no lithium carbonate is added to prepare the magnesium lithium silicate material, and carbon coating was not performed, although the obtained anode material has a high capacity, its volume expansion coefficient is very high, and the cycle retention rate is very small, and the first efficiency is also low.

By comparing the Example 1 and the Comparative Example 3, it can be seen that no molten salt is added in Comparative Example 3, and when the lithium magnesium silicate material is prepared, there are basically no pores formed, and it is not easy to form a structure where carbon materials are entangled with lithium magnesium silicate materials, and the obtained product has a low cycle retention rate.

By comparing the Example 1 and the Comparative Example 4, it can be seen that in Comparative Example 4, molten salt was added but not pickled with hydrochloric acid, the obtained anode material contained more molten salt, and it was not easy to form magnesium lithium silicate with a porous structure. The material has low capacity, low first efficiency and, low cycle retention, and high volume expansion coefficient.

By comparing the Example 1 and the Example 2, it can be seen that in Example 1, the lithium magnesium silicate material is obtained by sintering first, and then the carbon material is obtained by calcining, and in Example 2, the lithium magnesium silicate and carbon material are formed by one heat treatment to obtain, there is few differences the performances of the anode materials, which means that the performance of the obtained anode materials can be made better by sintering, calcination, or one-time heat treatment.

By comparing the Example 1 and the Example 3, it can be seen that Example 1 is pressurized coating, and Example 3 is an atmospheric pressure coating. The performance of the anode material obtained by pressurized coating is relatively better.

By comparing the Example 1 and the Example 4, it can be seen that in Example 1, the carbon material is prepared by coating with asphalt, and in Example 4, the carbon material is prepared by chemical vapor deposition, and the performances of the obtained anode materials are equivalent.

By comparing the Example 1, Example 5 and Example 6, it can be seen that the M metal in LiₓM_{y}SiO₄ in Example 1 is magnesium, the M metal in Example 5 is aluminum, the M metal in Example 6 is a mixture of magnesium and aluminum, the performances of the final anode materials are equivalent.

By comparing the Example 1, Example 7 and Example 8, it can be seen that the diameter of the first skeleton in the anode material of Example 7 is excessively large, the gram capacity and first efficiency of the material are reduced, the cycle performance and expansion performance are not significantly improved. This is because the size of the first skeleton is relatively large, it is difficult for lithium ions to deintercalate in the nano-silicon particles, resulting in a decrease in the capacity and first efficiency of the material. In the anode material of Example 8, the diameter of the second skeleton is excessively large, and the electrical performance decreases. This is because the diameter of the second skeleton increases, the carbon content in the material increases, and the capacity and first efficiency of the carbon material are lower than those of nano-silicon, resulting in a decrease in the capacity and first efficiency of the composite material.

By comparing the Example 1, Example 9 and Example 10, it can be seen that the porosity of the anode material in Example 9 is excessively small, and the expansion of the material becomes larger. This is because the porosity of the material decreases and the space to reduce the volume expansion of nano-silicon during a charging and discharging process is relatively reduced, resulting in a larger cyclic expansion of the material. The porosity of Example 10 is excessively large, the specific surface area of the material becomes larger, and the cycle performance deteriorates. This is because the void increases and the electrolyte solution permeates into the material more easily, resulting in an increase in the side reaction between nano-silicon and electrolyte, and poor cycle performance.

It should be clear that the described embodiments are merely part of the embodiments of the present disclosure rather than all of the embodiments. The detailed description of the embodiments of the present disclosure is not intended to limit the claimed scope, but merely represents selected embodiments of the present disclosure. All other embodiments obtained by those skilled in the art without paying creative labor shall fall into the protection scope of the present disclosure.

## Claims

1. An anode material, comprising a composite material, wherein the composite material comprises a first skeleton and a second skeleton that are entangled with each other, and nano-silicon; the first skeleton comprises a LiₓM_{y}SiO₄ material, the second skeleton comprises a carbon material, and the nano-silicon is distributed in the LiₓM_{y}SiO₄ material or/and on a surface of the LiₓM_{y}SiO₄ material; in the LiₓM_{y}SiO₄ material, values of x and y satisfy charge balance, and M comprises a metal element capable of reducing silicon oxides, the metal element excludes Li.

2. The anode material according to claim 1, wherein the anode material satisfies at least one of the following conditions (1)-(14):
(1) the anode material further comprises a carbon coating layer on a surface of the composite material;
(2) the carbon coating layer has a thickness of 5nm to 80nm;
(3) in the LiₓM_{y}SiO₄ material, 2≤x≤3.4, and 0.4≤y≤1;
(4) M comprises Mg or/and Al;
(5) the nano-silicon has a particle size of 5nm to 200nm;
(6) the carbon material comprises one of soft carbon and hard carbon or a combination thereof;
(7) the anode material has a specific surface area of 1m²/g to 3m²/g;
(8) a shape of the anode material is spherical particle, and the anode material has an average particle diameter D50 of 5µm to 30µm;
(9) the second skeleton has a diameter of 10m to 500nm;
(10) the first skeleton has a diameter of 10nm to 400nm;
(11) the LiₓM_{y}SiO₄ material accounts for 5% to 30% by mass of the anode material;
(12) the nano-silicon accounts for 30% to 60% by mass of the anode material;
(13) the carbon material accounts for 10% to 65% by mass of the anode material; and
(14) the carbon coating layer comprises the carbon material.

3. An anode material, comprising a composite material, wherein the composite material comprises a LiₓM_{y}SiO₄ material, a carbon material and nano-silicon; the LiₓM_{y}SiO₄ material is a porous structure, pores of the LiₓM_{y}SiO₄ material are filled with the carbon material, and the nano-silicon is distributed in the LiₓM_{y}SiO₄ material or/and on a surface of the LiₓM_{y}SiO₄ material; in the LiₓM_{y}SiO₄ material, values of x and y satisfy charge balance, and M comprises a metal element capable of reducing silicon oxides, the metal element excludes Li.

4. The anode material according to claim 3, wherein the anode material satisfies at least one of the following conditions (15)-(27):
(15) the anode material is located at a carbon coating layer on at least part of a surface of the composite material;
(16) the carbon coating layer has a thickness of 5nm to 80nm;
(17) in the LiₓM_{y}SiO₄ material, 2≤x≤3.4, and 0.4≤y≤1;
(18) M comprises Mg or/and Al;
(19) the nano-silicon has a particle size of 5nm to 200nm;
(20) the carbon material comprises one of soft carbon and hard carbon or a combination thereof;
(21) the anode material has a specific surface area of 1m²/g to 3m²/g;
(22) a shape of the anode material is spherical particle, and the anode material has an average particle diameter D50 of 5µm to 30µm;
(23) the LiₓM_{y}SiO₄ material has a porosity of 30% to 46%;
(24) the LiₓM_{y}SiO₄ material accounts for 5% to 30% by mass of the anode material;
(25) the nano-silicon accounts for 30% to 60% by mass of the anode material;
(26) the carbon material accounts for 10% to 65% by mass of the anode material;
(27) the carbon coating layer comprises the carbon material.

5. A lithium ion battery comprising the anode material according to any one of claims 1-4.

6. A method for preparing an anode material, wherein the method comprising:
forming a LiₓM_{y}SiO₄ material with nano-silicon, wherein the nano-silicon is distributed the LiₓM_{y}SiO₄ material or/and on a surface of the LiₓM_{y}SiO₄ material, and has a porous structure or a network structure; in the LiₓM_{y}SiO₄ material, M comprises a metal element capable of reducing silicon oxides, the metal element excludes Li; and
filling pores of the porous structure or voids of the network structure of the LiₓM_{y}SiO₄ material with a carbon material to obtain the anode material.

7. The method according to claim 6, wherein the method further comprising:
mixing a skeleton material having the network structure or the porous structure with a lithium salt, and then sintering to obtain the LiₓM_{y}SiO₄ material, wherein the skeleton material comprises nano-silicon, silicon oxide and metal M oxide, wherein the silicon oxide and the metal M oxide are loaded on a surface of the nano-silicon; and forming the carbon material in the pores or voids of the LiₓM_{y}SiO₄ material to obtain the anode material; or
mixing the skeleton material having a network structure or a porous structure, the lithium salt, and an organic carbon source, and then performing heat treatment to obtain the anode material, wherein the skeleton material comprises nano-silicon, silicon oxide and metal M oxide, wherein the silicon oxide and the metal M oxide are loaded on a surface of the nano-silicon.

8. The method according to claim 7, wherein the forming the carbon material in the pores or voids of the LiₓM_{y}SiO₄ material to obtain the anode material comprises:
mixing and calcining the LiₓM_{y}SiO₄ material with the organic carbon source, carbonizing the organic carbon source to form the carbon material; or forming the carbon material in the pores or voids of the LiₓM_{y}SiO₄ material by chemical vapor deposition;
or
the mixing the skeleton material having the network structure or the porous structure, the lithium salt, and an organic carbon source comprises:
mixing the skeleton material having the network structure or the porous structure with the lithium salt, and then mixing with the organic carbon source.

9. The method according to claim 7 or 8, wherein preparing the skeleton material comprises:
mixing and granulating the silicon oxide and a binder to obtain a precursor 1;
mixing the precursor 1, metal M powder and a molten salt, and performing a thermal reaction such that at least part of the silicon oxide is reduced to nano-silicon to obtain a precursor 2; and
pickling the precursor 2 to remove part of the metal M oxide, so as to form the skeleton material having the porous structure or the network structure.

10. The method according to claim 9, wherein the method satisfies at least one of the following conditions (28)-(32):
(28) the silicon oxide and the binder are dispersed in a solution, and spray-granulated to obtain the precursor 1;
(29) a mass ratio of the silicon oxide to the binder is (40-100): 1;
(30) a mass ratio of the precursor 1, the molten salt and the metal M powder is 1:(3 to 8):(0.5 to 1.5);
(31) the metal M powder comprises one or more of Mg powder, Al powder and MgAl alloy powder;
(32) the skeleton material, a soluble lithium salt and water are mixed, stirred uniformly and then dried.
